# EUROPEAN PATENT APPLICATION

(11) **EP 4 534 230 A1**
(43) Date of publication of application: **09.04.2025**
(21) Application number: 23201544.6
(22) Date of filing: 04.10.2023
(51) Int. Cl.: B23K 26/082, B23K 26/352, B23K 26/70

(54) **LASER FOR LASER ENGRAVING AND METHOD OF ASSEMBLING A LASER FOR LASER ENGRAVING**

(71) Applicant: IAI industrial systems B.V., 5504 DE Veldhoven (NL)
(72) Inventor: Budel, Hendrik-Jan, 5508 DX Veldhoven (NL); Augustinus, Arnoud, 5521 LC Eersel (NL)
(74) Representative: DTS Patent- und Rechtsanwälte PartmbB

(57) **Abstract**

The present invention provides a laser for laser engraving. The laser has housing (1), a galvo head (2) for manipulating a laser beam (5) in order to execute laser engraving with the laser beam (5), and a beam dump (14) for dumping a part of the laser beam (5) in order to control the power of the laser. Further a cooling system is provided which is adapted to cool locally at least a portion of the galvo head (2) and at least a portion of the beam dump (14). Further, it is provided a method of assembling a laser for laser engraving.

## Description

The present invention is related to a laser for laser engraving.

In particular, laser engraving is used for implementing security features for identification documents such as ID cards. The use of ID cards is growing in importance over the world for use as driving licenses, financial transaction or bank cards, national ID cards, student cards, passports, security clearance cards, etc.

Generally, for having a micrometer accuracy, there must be provided a stable laser which has no significant drift, for example, due to external temperatures or internal heat loads or vibrations.

Further, for production of the security features of the identification documents, the power of the laser is advantageous to be tunable and such a tunable laser should be operable in the whole range in a stable manner. In the prior art, there is no large power range tunable laser available for making such security feature with a high micrometer accuracy. In particular, such tunable lasers may have a beam dump. This beam dump in particular heats up and thus makes the micrometer accuracy worse.

In view of the foregoing problems, the present invention has been made and provides a laser having the features defined in claim 1.

In particular, the laser has a housing, a galvo head and a beam dump. The galvo head may also be integral with and/or the same part as the housing. For easier mounting said elements may be separate parts. The laser may have additional features, but at least the galvo head and the beam dump are cooled locally at a respective portion thereof. From the present description, the term "galvo" is used to specify a galvanometric scanner or Galvano scanner. Such Galvano scanners are conventionally used in modern laser optics. Galvos may have electromagnetically driven rotary axes, at the end of which there is provided a laser mirror for deflecting laser beams, for displaying text, laser animations and or for laser engraving. The scanning speed of the galvos is given in Kpps (kilo point per second).

The aforementioned galvo head is a part in which one or more galvos are mounted (e.g. an x-axis galvo and/or a y-axis galvo).

The galvo head thus is adapted to manipulate the laser beam (in particular the galvo or galvos in the galvo head may execute a scanning movement of the laser beam) in order to execute laser engraving with the laser beam.

Further, the laser has a beam dump for dumping a part of the laser beam in order to control the power of the laser beam with which the laser engraving is executed. Generally, such beam dumps are for absorbing a part of the laser beam such that it is possible to tune the power ranges which come out of the laser. Said combination of the cooling with a dynamic and electronically controlled power attenuator is to achieve a stable laser beam, where stable means that there are no or substantially non fluctuations of intensity over time.

In the laser for laser engraving, at the Galvano head and at the beam dump during the operation of the laser, strong changes in the internal heat loads may occur. Therefore, there is provided according to the present invention a cooling system, for example in the form of a cooling circuit which is adapted to cool locally at least a portion of the galvo head and a portion of the beam dump. Additionally or alternatively also one or more of the galvo drivers and/or further electronic components may be cooled accordingly.

Also in the following, as preferred embodiment, there is described a liquid cooling through the cooling circuit, this cooling system may also be provided by a highly effective air cooling system. In this air cooling system, the cooling air may be blown locally to at least a portion of the galvo head and additionally to a portion of the beam dump. These portions may be portions, in which heat is generated during operation of the laser.

According to a further development, the cooling system is a liquid cooling system and thus, there may be provided a cooling circuit including for example a piping which guides a cooling liquid, at least through a portion of the galvo mounting (the mounting with which a respective galvo is mounted to the galvo head) and a portion of the beam dump (e.g. the beam dump outer part, which is mounted to the outside of the housing). Thus, at least the galvo mounting or the beam dump outer part may have a cooling liquid inlet to guide the cooling liquid through the respective body or housing of the galvo mounting or respectively the beam dump outer part. The other of the galvo mounting or the beam dump outer part may have a cooling liquid outlet to guide the cooling liquid out of the laser.

The respective cooling liquid may be circulated via a circulation pump which may not be part of the laser. The cooling circuit may be constituted by piping having removable connection fittings to the circulation pump and the respective circulation pump may be controlled to cool at least a portion of the beam dump or the galvo head.

In the galvo head, at least the galvo mounting is cooled. The galvo mounting is a mounting body through which the galvo is mounted to the galvo head.

It is beneficial that the galvo mounting is provided in the liquid circulation direction upstream of the beam dump outer part in the liquid cooling system. Namely, the beam dump may have in particular a beam dump inner part which is provided inside the housing and a beam dump outer part which is provided outside the housing. In the beam dump outer part, a part of the laser beam may be absorbed in order to control the power of the laser beam used for engraving.

As the galvo mounting does not heat up so much during operation compared to the beam dump outer part, it is beneficial to use the respective not yet heated cooling liquid to first cool the galvo.Thus, the galvo mounting is provided in the liquid cooling system upstream of the beam dump outer part which heats up more than the galvo mounting during operation. In a further variant it is beneficial that the liquid cools first the galvo, next the galvo driver and/or electronics and therafter the beam dump part.

The laser may further have one or more drivers for driving a respective galvo in order to execute laser engraving with the laser beam. The drivers (one or more driver for a respective galvo in the galvo head), may be mounted on a cooling body. This cooling body is adapted to be cooled by the liquid cooling system. In particular, it may be beneficial that the cooling body is provided in the cooling system upstream of the beam dump outer part and/or downstream of the galvo mount.

Thus, beneficially, the cooling is done in the sequence galvo, cooling body on which one or more drivers are mounted, and then beam dump outer part. The cooling body may be mounted on a planar surface of the housing, for example, a top or bottom side of the housing.

In particular, the housing may house a collimator for collimating the laser beam and thus producing a beam with a large diameter, e.g. 5 mm, an optical compressor which brings the beam down to a diameter fitting for the rest of the system and a modulator for separating the part of the laser beam to be fed to the beam dump. After the modulator the beam may be again expanded, using an expander to widen he beam to the desired diameter for the input on the later explained galvo mirrors. Further, within the housing, there may be provided the beam dump inner part. Within the housing, there may also be provided a shutter to shut the exit of the laser beam. The aforementioned optical compressor and collimator are not necessarily provided in the housing.

The laser beam may be collimated and pulse compressed and then reflected and guided via further mirrors which may be included within the housing through the housing and out of a front wall of the housing, e.g. in the axial direction of the housing (which may correspond to a z-axis direction in an orthogonal coordination system).

The housing may have the constitution of a cylindrical element, which in particular may have a cross-section of a square or rectangle, and which has an extension in the longitudinal direction. The beam dump outer part may be mounted to a side surface of the housing. The beam dump outer part is in alignment with the beam dump inner part such that the part of the laser beam comes from the beam dump inner part and is dumped in the beam dump outer part.

The above mentioned modulator may split the incoming laser beam (incoming to the housing) into two major beams: the zero order and the first order. The first order is aligned through the rest of the optics and used as the process beam. The zero-order is directed to the dump. In process the modulator can switch rapidly and analog between the first and zero order, thus selecting the desired power on the workpiece.

On the front side of the housing, there may be mounted the galvo head. This galvo head may be a separate element from the housing and may be made as a unitary part in which the galvo mountings and further preferably, also the later described camera mounting may be fixed so that the galvo or galvos and the camera are provided within the galvo head which may provide a unitary part (e.g. the galvo head body which may form a unitary hollow part).

Also, the galvo head may be made basically of a cylindrical galvo head body which has a cross-section which is rectangular or square. The galvo head body as well as the housing body of the housing may be machined to be a machined part or may be a cast unitary part.

The laser beam may be irradiated from the front surface of the housing and the laser beam is guided through the galvo head and directed by the respective galvos in respective direction (x, y direction), such that by the respective galvos, there is executed an x- or y-scan. Namely, a respective y-galvo executes a y scan and x-galvo performs an x-scan on a surface which is to be laser engraved.

It may be the case that the laser beam is irradiated from the front side of the housing and then, basically bent by approximately 90 degrees within the galvo head, such that the scanning laser beam is directed outside a bottom or top surface of the laser.

A bottom or top surface of the laser is seen as a part different from the respective two sides (side walls) in the longitudinal direction and different to the front and the back.

So, basically, there are provided for each of the housings and the galvo head and thus the laser which is constituted by the housing and the galvo head, two side walls, one front wall, one rear wall and one top and a bottom wall, which walls may have a substantially planar shape. These walls are beneficially not separate parts. Both main buidling blocks (Modulator housing & galvo head) may be monolithic blocks.

However, at the top or the bottom surface thereof, the galvo head and/or the housing may have an opening through which a respective element can be fitted in the galvo head and/or the housing. The respective housing or galvo head may be unitary members and only opened from one side. The respective walls of any of the housings or the galvo head each has at least a portion which is planar and may have a thickness of between 10 to 50 mm. Thus, there is provided a high rigidity and therefore lower sensitivity to vibration of the component and thus higher accuracy. Further preferred thicknesses are 20 mm, 35 mm, 45 mm. Each of the aforementioned thicknesses may serve as an upper or lower border in the aforementioned range of wall thicknesses.

In particular, the x-galvo may be mounted at a front wall of the galvo head (e.g the galvo head body). The y-galvo may be mounted at a top wall or bottom wall of the galvo head (e.g the galvo head body). At the same wall where the y-galvo is mounted, also the later described camera may be mounted. The respective galvo may be fixed with a planar wall (provided at the galvo mounting) to a respective planar wall of the galvo head body.

Thus, per definition, the laser beam comes out at the bottom wall of the galvo head body. However, the respective laser beam can also come out at the top wall of the galvo head body.

At least, the galvo head may be mounted flush with a planar surface thereof on the front wall of the housing.

One or more of the galvo mountings, namely a respective galvo mounting for mounting the x-galvo or a galvo mounting for mounting the y-galvo, may be provided in a mounting opening of the galvo head body. Each of the one or both or all of the galvo mountings may have channels guided therethrough for guiding the cooling liquid through.

Thus, the galvo mountings may be made of high thermal conductive material, such as copper or an alloy thereof. The galvo mounting may be made of two shells interposing therebetween the respective cooling channels.

According to a further preferred embodiment, the galvo head may have a camera mounting to which an optical camera is mounted. Thus, there is provided also in the galvo head an optical camera.

The optical camera has an optical path which is preferably merged with the laser beam within the galvo head. This may be done by means of a dichroic mirror in the path of the laser beam and the optical path. The dichroic mirror could also be in de modulator housing. The dichroic mirror should be located after the 2nd expander and before the galvo mirrors.

Superimposing the optical path of the camera and the laser beam provides a high accuracy in positioning the laser engraving. The accuracy is increased by a calibration process where the laser engrave head is coupled to a camera. The optical path of the laser and the camera path is merged. This results in a much higher camera resolution at the work field and thus a much better calibration and a much higher accuracy. This also allows for accurate measurement of fiducial present as pre-prints in the document design that can be linked with high precision to the location of the laser beam to ensure placing the beam in the right location. This is of relevance as for some security features, the start of the personalization is required to be at precise location of the document, sometimes matching other existing features. Furthermore, this invention of the camera and laser path merged, allows for a high accuracy of the engraving positions over the entire work field (typically 125 x 125 mm).

Superimposing the camera and laser beam also makes the system almost insensitive to Z (height) variations and drift of the components they both use (mainly X and Y galvo). This because both channels undergo the same deviations and are thereby canceled out.
This superimposing also makes the system much less sensitive for thermal or other distortions in the part that is after the dichroic mirror

According to a further development, the beam dump may be constituted by the aforementioned beam dump inner part and the beam dump outer part. The beam dump outer part is adapted to absorb a part of the laser beam in order to control the power of the laser. The beam dump inner part may have a dump mirror which reflects the part of the laser beam to be dumped to the inside of the beam dump outer part. The dump mirror may be a coated mirror.

In the prior art, for such a beam dump mirror, there was used polished copper, however, in the present case no polish copper is used, because the coated mirror has a very high reflectivity.

Within the beam dump inner part, there may further be provided a lens in order to lower the intensity of the laser beam to be dumped in the beam dump outer part.

Further, it may be provided inside the housing a negative lens which is adapted to diverge the part of the beam to be dumped such that the diverged laser beam parts are reflected on the dump mirror separately. Also, with said measure, the intensity of the laser beam parts is reduced such that the beam dump is more durable, namely the peak spot temperature will be lower which is beneficial for durability.

The combination with also cooling of the outer part, at which the laser beams are dumped, provides a highly stable and high durable laser.

In particular, the beam dump outer part may have a flat surface which is mounted flush on the side surface of the housing. The beam dump outer part may have one or more channels for guiding the cooling liquid through.

In particular, similar to the configuration of the aforementioned galvo mounting, also this beam dump outer part may be constituted by two or more shells and sandwiched therebetween, the respective cooling channels are provided. The aforementioned cooling channels may be connected to the piping setting up the cooling system.

In particular, the galvo mount and/or the beam dump outer part and/or the cooling body, on which the driver or drivers for the galvo are mounted, may be made of copper or any highly thermal conductive metal or alloy.

In particular, the aforementioned elements may be mounted to the respective flat surface of the housing or respectively the galvo head. In particular, the material and geometry of one or more or any of those elements may be chosen such that a thermal center lies in the connection interface between the respective element and the housing/ galvo head. It is in particular advantagous that the compressor may be made of a material with a different thermal expansion coefficient than the modulator housing. In this case those elements may be chosen such that a thermal center lies in the connection interface between the those elements.

At the respective connection interface, there may be provided a specific bearing made, for example, of non-thermally conductive material, such as glass or any other jewel, in order to prevent a heat conduction between the respective elements.

The housing may be made of aluminum.

Some parts of the laser, such as the collimator or compressor may be made of steel, other parts such as the galvo mounts, the beam dump outer part and the cooling body may be made of copper.

According to a still further development within the housing, there may be provided a first and/or second and/or further expanders. With respective expander, the beam size of the laser beam can be adapted. This flexibility on having different expansion ratios of beam expanders allows to tune the size of the spot accordingly with the requirement of security features; some of which have a required maximum or minimum size.

According to a coordinated aspect of the invention, there is provided a method of assembling a laser for laser engraving. The laser may be the aforementioned laser which hastunable power.

Further, there may also be provided a method for operating the aforementioned laser for laser engraving an ID card with a position accuracy and repeatability of less than 5um of the process in the workfield.

Also in the foregoing section, there are described several means and aspects in combination. Each of the respective features can be also set up in one own invention. It is not necessary to provide the cooling system as defined in claim 1.

An invention may be the galvo head itself without the further elements of the laser such as the housing. The invention may be also related only to the housing including the beam dump. The invention may also be about the selection of materials for the different elements setting up the laser. The invention may be about merging the optical path of the camera with the laser path. The invention may also be about providing a thick-walled housing and/or galvo head.

However, at least the aforementioned features can be claimed as such as an invention.

Nevertheless, as long as not explicitly described, none of the aforementioned features are inextricably linked to other features. Also, any feature which is solely shown in the Figures and not explicitly described in the previous description can serve as an invention as such.

Further aspects of the invention are described based on the Figures, in which it is shown by
- Fig. 1: a schematic setup of an example of an inventive laser;
- Fig. 2: the elements provided inside the housing or respectively the galvo head of the laser shown in Fig. 1;
- Fig. 3: the outer appearance of the inventive laser shown in Figs. 1 and 2 without a lower housing cap such that the electronic components and drivers are visible;
- Fig. 4: a part within the housing how the compressor is mounted to the housing in the example of Fig. 1;
- Fig. 5: a partially opened view of the laser of Fig.1, such that the elements within the housing and the galvo head are visible;
- Fig. 6: a schematic view of the constitution of the galvo head of the inventive system shown in Fig. 1;
- Fig. 7: details of the schematic view in Fig. 1 concerning the merging of the optical path with the laser beam path, and
- Fig. 8: details of the beam dump of the system of Fig. 1.

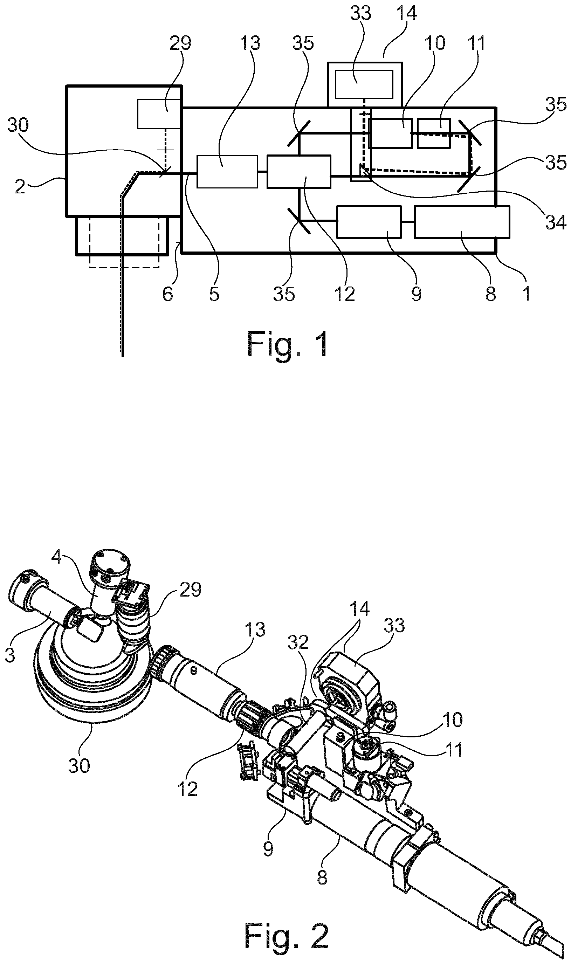

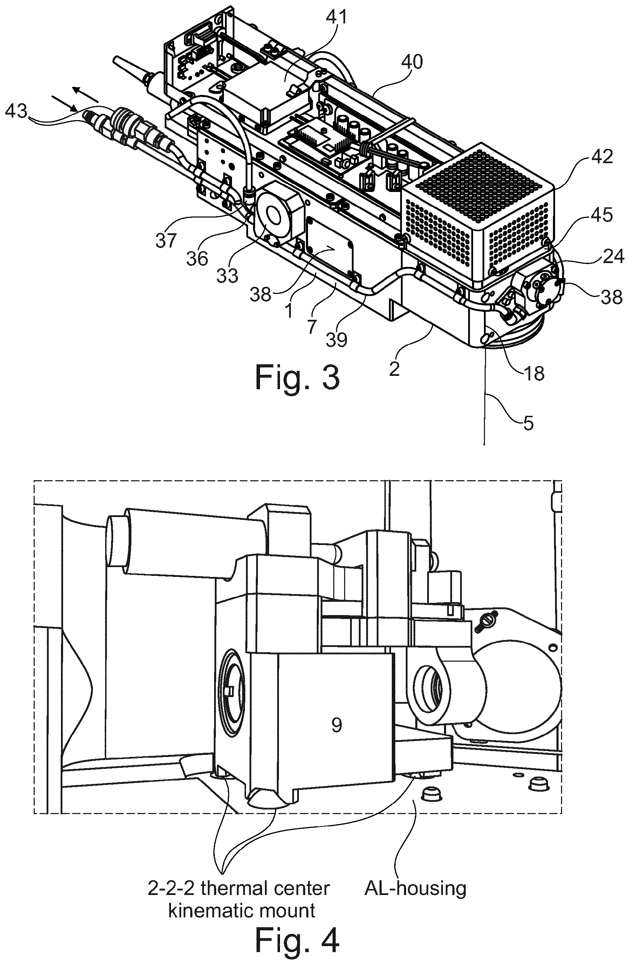

Fig. 1 shows a schematic view of an example of the inventive laser for engraving. The laser has, as shown in Fig. 1, on the right side a housing 1 (for the ref. see Fig. 3) and on the left side a galvo head 2. The galvo head 2 is a part in which one or more galvanomatic scanners 3, 4 (galvos) are provided (for the ref. see Fig. 2).

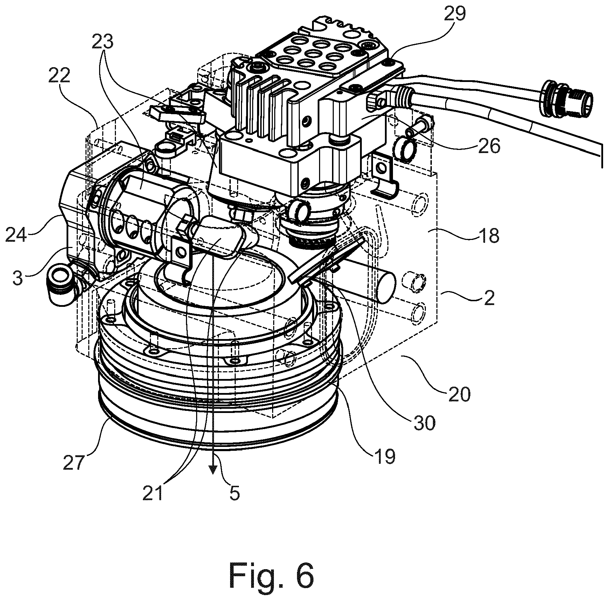

As shown in Figs. 2 and 6 within the galvo head 2, there are provided in the specific case an x-galvo 3 (a galvanomatic scanner providing a scanning of the laser beams along the x-axis of the sheet to be engraved) and a y-galvo (galvanomatic scanner providing a scanning in the y direction of the sheet to be engraved), e.g. Fig. 2. The orthogonal coordination system with x-y-z-direction is depicted in Fig. 2. Herein, the z-direction corresponds to the direction of the laser beam exiting the laser.

The housing 1 has a housing body 7 with a cavity within which different elements setting up the laser are contained.

In the specific case, there is provided within the cavity of the housing body 7 a collimator 8 (see Fig. 1) for collimating a laser beam, a compressor 9 for compressing the laser pulses and a modulator 10 for separating the part of the laser beam to be fed to the beam dump 14, a shutter 11 for shutting the laser path for both the laser exiting the housing and the laser guided to the beam dump 14. There is further provided in the specific case within the housing 1 a first expander 12 and a second expander 13. The expanders 12, 13 are for adjusting and changing the spot beam sizes of the laser beam 5.

The laser beam may be generated by a not shown laser diode. This laser light may be guided through the collimator 8 and from there, through the compressor 9 which is an optical compressor to the modulator 10, the shutter 11, the first expander 12, the second expander 13 and at the front side 6 of the housing out of the housing 1 in the longitudinal direction of the housing.

The collimator 8 is for collimating the laser beam 5 and thus producing a beam with a large diameter, e.g. 5 mm. The optical compressor 9 brings the laser beam down to a diameter fitting for the rest of the system and the modulator 10 is for separating the part of the laser beam to be fed to the beam dump. After the modulator the beam may be again expanded, using one or both of the aforementioned expanders to widen he beam to the desired diameter for the input on the later explained galvo mirrors.

The above mentioned modulator 10 may split the incoming laser beam (incoming to the housing 1) into two major beams: the zero order and the first order. The first order is aligned through the rest of the optics and used as the process beam. The zero-order is directed to the beam dump 14. In process the modulator 10 can switch rapidly and analog between the first and zero order, thus selecting the desired power on the workpiece.

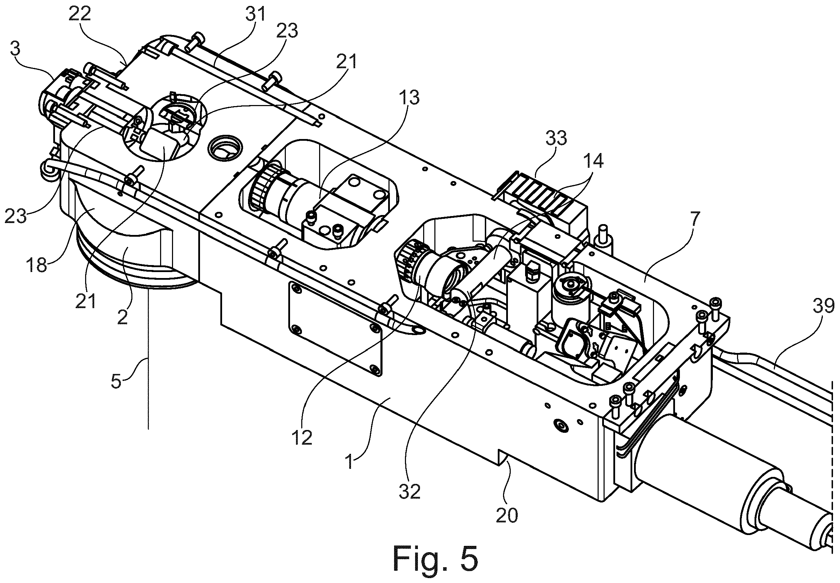

As shown in Fig. 5 at a rear side, there may be provided a plug/socket connection for operating the laser. Via this plug/socket connection the laser may be operated and/or controlled.

At the front side 6 of the housing 1, there is mounted in the specific case the galvo head 2 which has a galvo head body 18.

Within the galvo head body 18, there may be provided the galvos 3, 4 and a camera 29 (see Fig. 1, which is later described). The galvo head body 18 is shown partially transparent in Fig. 6. This galvo head body 18 may be a monolithic block formed from a machined or casted material, e.g. an aluminum material. There may be provided some openings at the galvo head body. There is one outlet opening 19 which is in the present case provided on the bottom side 20 as seen in Figs. 5 and 6.

Through this outlet opening 19 (e.g. Fig. 6), the laser beam 8 after deflection on the galvo mirrors 21 of the respective x- or y-galvo 3, 4 exits the laser.

There is further provided on the front side 22 of the galvo head 2 a galvo mounting opening 23 in which a galvo mounting (in the particular case the X galvo mounting 24 for mounting the X galvo 3 can be mounted.

In Fig. 6, it is not so good visible but there is also provided on a top side of the galvo head 2 a galvo mounting opening 23, in which a galvo mounting (in the particular case the x-galvo mounting 25) for mounting the y-galvo 4 can be mounted.

At this top side, there is also provided a camera mount 26 at which a camera 29 is mounted.

At the bottom side, there is also provided an opening on which the flange 27 is mounted which provides access inside the cavity of the galvo head body 18. Said flange is mounted in said opening with demountable screws.

In the particular case, the galvo head body 18 has a basically cylindrical shape with square geometry.

The rear of the galvo head is the side at which the galvo head is mounted to the front side 6 of the housing 1. At this respective interface, there are provided flat matching surfaces of the galvo head 2 and the housing 1. Via the mounting screw 31 (e.g. Fig. 5), the galvo head 2 can be fixed to the front end of the housing body 7.

However, within the galvo head 2, there are provided the galvo mirrors 21 for the x-galvo 3 and the y-galvo 4 and the camera 29.

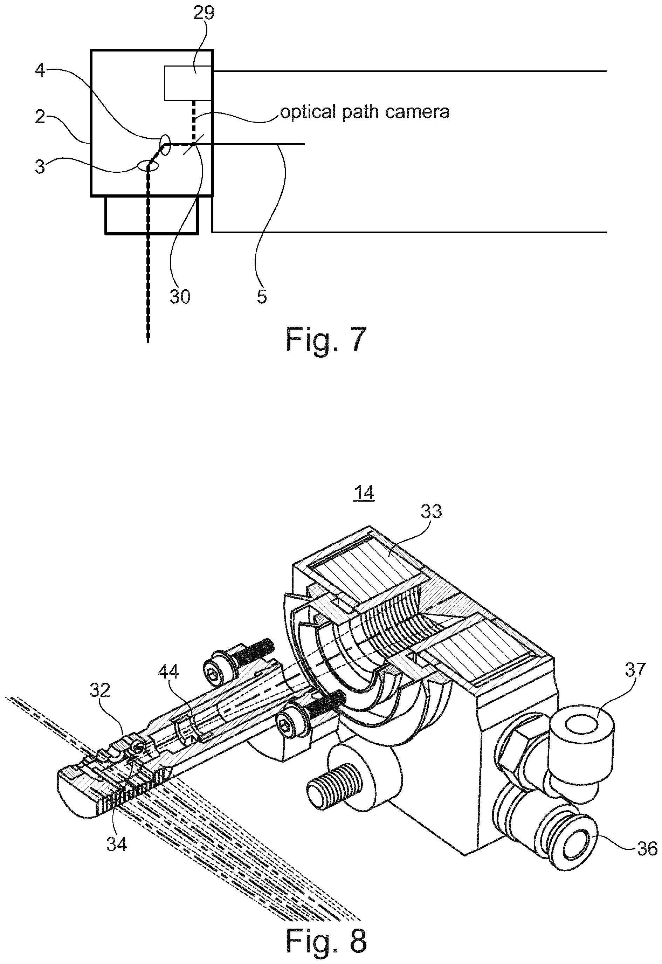

As derivable from Figs. 1 and 7, the optical path of the camera 29 is merged with the laser beam 5 via the dichroic mirror 30. The optical path of the laser and the camera path is merged. This results in a much higher camera resolution at the work field and thus in a much better calibration and thus in a much higher accuracy. This also allows for accurate measurement of fiducial present as pre-prints in the document design that can be linked with high precision to the location of the laser beam to ensure placing the beam in the right location. This is of relevance as for some security features, the start of the personalization is required to be at precise location of the document, sometimes matching other existing features. Furthermore, this invention of the camera and laser path merged, allows for a high accuracy of the engraving positions over the entire work field (typically 125 x 125 mm).

Each of the galvo mounting 24, the galvo mountig 25 and the camera mounting 26 are e.g. made of copper. In the present case, galvo mounting 24 and the galvo mountig 25 are made from copper and the camera mounting 26 is not made of copper. The respective mountings are in the present case separate parts, separate from the galvo head body 18 and serve as elements via which the galvos 3, 4 can be mounted to the galvo head body 40. Also the galvos 3, 4 may be separate elements, separate from the respective galvo mounting. The fixation of the elements is e.g. made by a screw connection.

The galvo head 2 including the aforementioned elements is provided in one assembly, which may be as such one assembly coupled to or decoupled from the housing 1 at the formed side thereof.

The specific configuration of the elements within the housing body 7 can be derived from Figs. 2 and 5.

The beam dump 14 has a beam dump inner part 32 and a beam dump outer part 33. The beam dump inner part 32 has a tubular form and is provided within the cavity of the housing 1.

Within the beam dump inner part 32 as shown in Fig. 8, there may be provided a beam dump mirror 34 which may be a right angle mirror made of glass which has a coated surface. In particular, any coated mirror may be used as this is better than using a polished copper mirror because the reflectivity of such a coated mirror is higher.

Further, in order to lower the intensity of the part of the beam to be dumped, there is provided downstream of the beam dump mirror 34 a beam dump lens 44.

In the specific case, as shown in Fig. 1 in combination with Fig. 8, the part of the laser beam which is to be dumped is deflected in the modulator 10 and via the deflection mirrors 35, it is guided through the housing 1 into the beam dump inner part 32. The deflection mirrors 35 may also be simultaneously used to guide the laser beam 5 for laser engraving through the housing 1.

Within the housing 1, there may be provided (which is not shown in the Figures) a negative lens which separates the one beam part which is to be dumped into a plurality of partial beam parts of the part which should be dumped as shown in Fig. 8. Thus, the intensity of each part of the beam part to be dumped is reduced.

This reduction may or may not be provided additionally to the beam dump lens 44, which is previously described.

This beam dump inner part 32 may be screwed to an inner surface side of the housing 1 as shown in Figs. 5 and 8. Said beam dumped inner part 32 is aligned to the beam dump outer part 33, which is mounted on a side wall 38 of the housing 1. The beam dump outer part 33 has a planar surface which lies flush on the side wall of the housing 1.

The beam dump outer part 33 may be made of copper. In the specific case, it may be made of a two shells, which is not shown in Fig. 8, cooling channels sandwiched therebetween. In particular, in said Figure, there is shown a cooling liquid inlet 36 and a cooling liquid outlet 37, which may be coupled to a pipe 39 which defines the cooling circuit as shown in Figs. 3 and 5.

Within the dump outer part 33, the respective laser beam 5 is dumped via a copper cone inside the hole provided in the beam dump outer part 33. The beam dump outer part 33 may have a seal which is guided through an opening in the side wall 38 of the housing 1 to interact and to be connected with the beam dump inner part 32 (see Fig. 8 in combination with Fig. 5). However, in this specific case, the beam dump outer part 33 is provided at a side wall 38 of the housing.

Before the cooling liquid flows through the beam dump outer part 33 as shown in Fig. 3, it has flown through a cooling channel between the two shell parts of a cooling body 40, to which drivers for driving a respective galvo 3, 4 are mounted. This cooling body 40 which is in Fig. 5 not shown has similar cooling liquid inlet and outlet and a cooling channel between the shells, as the galvo mounting 24 of the x-galvo 3 and the beam dump outer part 33. In the present case the galvo mounting 25 of the y-galvo 4 is not cooled. However it may also be cooled and have a corresponding configuration as the galvo mounting 24 of the x-galvo 3.

By cooling the cooling body 40, a cooling of the drivers mounted on the cooling body 40 is achieved.

Upstream of the cooling body 40 in the cooling system, there is provided the x-galvo mounting 24 which has also a respective cooling liquid inlet and cooling liquid outlet 36, 37. In the present case, the y-galvo 4 is not integrated into the cooling circuit.

Also in the present case, there is shown a pipe 39 connecting the different elements which are to be cooled, the respective cooling lines may also be integrated in the respective housing body 1 or galvo head body 18. As already outlined, instead of a liquid (e.g. water) cooling, there may also be provided air cooling.

As shown in Fig. 3, the housing 1 and also the galvo head 2 may be closed from the top side via a respective closing element 45 which houses the electric drivers and the circuit board for controlling the laser. In the particular case in Fig. 3, there is shown also a protection cap 42 for protecting the outlet at the galvo head.

In the specific case as shown in Fig. 3, the drivers for the galvos are mounted on the cooling body 40 which is also cooled.

As shown in Fig. 5, the side walls and the front and rear walls of the housing body 7 may have areas which have a plate-like configuration. The same also applies for the wall portions of the galvo head (see Fig. 6).

This wall thickness of said portions is preferably in the range of 18 to 50 mm. The respective housing or galvo head are unitary members and only opened from one side. The respective walls of any of the housing or the galvo head each has at least a portion which is planar and may have a thickness of between 10 to 50 mm. Thus, there is provided a high rigidity and so lower sensitivity to vibration of the component and thus higher accuracy. Further preferred thicknesses are 20 mm, 35 mm, 45 mm. Each of the aforementioned thicknesses may serve as an upper or lower border in the aforementioned range of wall thicknesses.

The cooling circuit, namely the pipe 39, may be coupled via the coupling 43 (e.g. Fig. 3) to a circulation pump which is also controlled to provide the respective cooling.

As shown in Fig. 1, after the remaining part of the laser beam is guided by the deflection mirrors 35 through the housing 1, it goes through the first and second expander 12, 13 and thereafter out of the front side 6 of the housing 1. At the front side 6 of the housing, the galvo head 2 is mounted and the laser beam 5 is deflected to a bottom side of the laser in the galvo head 2.

In particular, the materials used for the different elements (galvo mounting, beam dump outer part, cooling body, housing, beam dump inner part) are made such that that a thermal center is lying at the connection interface between the respective element and the housing body or respectively galvo head body to which the respective element is mounted.

In particular, in the specific case, the galvo mountings 24, 25 as well as the beam dump outer part 33 are made of copper shells similar to the above described cooling body 40.

Figure 4 shows a situation how the compressor 9 is mounted within the housing body 7. This is done via non-thermally conductive bearings. The housing is made e.g. of aluminum or an alloy thereof and the compressor 9 is made of steel. The thermal center is lying at the connection interface of these elements. Also, the other elements within the housing 1 can have a respective mounting situation (which is however not shown in the present Figures).

Also presently, there is described a specific embodiment, this embodiment should not limit the scope of the claims. The scope of protection is defined by the claims.

However, at least the aforementioned features can be claimed as such as an invention.

Nevertheless, as long as not explicitly described none of the aforementioned features are inextricably linked to other features. Also, any feature which is solely shown in the Figures and not explicitly described in the previous description can serve as an invention as such.

### List of Reference Signs

- 1: housing
- 2: galvo head
- 3: x-galvo scanner
- 4: y- galvo scanner
- 5: laser beam
- 6: front side of the housing
- 7: housing body
- 8: collimator
- 9: compressor
- 10: modulator
- 11: shutter
- 12: first expander
- 13: second expander
- 14: beam dump
- 18: galvo head body
- 19: outlet opening
- 20: bottom side
- 21: galvo mirror
- 22: front side of the galvo head
- 23: galvo mounting opening
- 24: x-galvo mounting
- 25: y-galvo mounting
- 26: camera mounting
- 27: flange
- 29: camera
- 30: dichroic mirror
- 31: mounting screw
- 32: beam dump inner part
- 33: beam dump outer part
- 34: beam dump mirror
- 35: deflection mirrors
- 36: cooling liquid inlet
- 37: cooling liquid outlet
- 38: side wall of the housing
- 39: pipe
- 40: cooling body
- 41: drivers
- 42: protection cap
- 43: coupling
- 44: beam dump lens
- 45: closing element

## Claims

1. A Laser for laser engraving comprising:
a housing (1),
a galvo head (2) for manipulating a laser beam (5) to execute laser engraving with the laser beam (5),
a beam dump (14) for dumping a part of the laser beam (5) to control the power of the laser,
wherein a cooling-system is provided which is adapted to cool locally at least a portion of the galvo head (2) and at least a portion of the beam dump (14).

2. Laser according to claim 1, **characterized in that** the cooling-system is a liquid cooling-system and comprises a cooling liquid inlet which is fluidly connected to one of a galvo mounting (24) or a beam dump outer part (33) of the beam dump (14), which beam dump outer part (33) is adapted to adsorb the part of the laser beam (5) in order to control the power of the laser beam (5), and a cooling liquid outlet which is fluidly connected to the other one of the galvo mounting (24) or the beam dump outer part (33) and a fluid connection between the galvo mounting (24) and the beam dump outer part (33), wherein the liquid cooling-system is adapted to circulate a cooling liquid in order to cool at least the galvo mounting (24) and the beam dump outer part (33).

3. Laser according to claim 2, **characterized in that** the galvo mounting (24) is provided upstream of the beam dump outer part (33) in the liquid cooling-system.

4. Laser according to any of claims 1 to 3, **characterized in that** the laser further comprises one or more drivers (41) for driving a respective galvo (3, 4) in the galvo head (2) to execute laser engraving with the laser beam (5).

5. Laser according to claim 4, **characterized in that** the one or more drivers (41) are mounted on a cooling body (40) which is adapted to be cooled by the liquid cooling system, wherein the cooling body (40) is provided upstream of the beam dump outer part (33) and/or downstream of the galvo mounting (24) in the liquid cooling-system.

6. Laser according to any of claims 1 to 5, **characterized in that** the housing (1) houses a collimator (8) for collimating the laser beam (5), a pulse compressor (9) for compressing laser pulses of the laser beam (5), a modulator (10) for separating the part of the laser beam (5) to be fed to the beam dump (14), and a beam dump inner part (32), and wherein the beam dump outer part (33) is mounted on a side surface of the housing (1) and in alignment with the beam dump inner part (32) such that the part of the laser beam (5) comes from the beam dump inner part (32) and is dumped in the beam dump outer part (33).

7. Laser according to any of claims 1 to 6, **characterized in that** the laser is configured **in that** the laser beam (5) is irradiated at a front side surface of the housing (1), wherein at the front side surface of the housing, there is mounted the galvo head (2), which is a separate element from the housing (1), and the laser beam (5) is moved in a scanning movement by the respective galvo (3, 4), which is mounted inside the galvo head (2) via the galvo mounting (24, 25).

8. Laser according to claim 7, **characterized in that** there is provided a y-galvo (4) and an x-galvo (3) each of which is mounted via a respective x- or y- galvo mounting (24, 25) to the galvo head (2), which galvos (3, 4) move the laser beam (5) in the x- or respectively y-direction in an orthogonal x-, y- z- coordinate system where the z-axis corresponds to the laser beam axis of the laser beam (5) irradiated from the front side surface of the housing (1), wherein one or both of the x- and y- galvo mounting (24, 25) is integrated in the liquid cooling-system.

9. Laser according to any of claims 1 to 8, **characterized in that** the housing (1) comprises a unitary housing body (7) including two opposite side walls, a front wall at the front side thereof and a rear wall at a rear side thereof, wherein the walls have at least a portion having a planar plate-like shape, and the wall thickness of said portion is at least 18 to 50 mm.

10. Laser according to any of claims 1 to 9, **characterized in that** the galvo head (2) comprises a unitary galvo head body (18) including two opposite side walls, a front wall at a front side thereof and a rear wall at a rear side thereof, wherein the walls have at least a portion having a planar plate-like shape, and the wall thickness of said portion is at least 18 to 50 mm.

11. Laser according to claim 10, **characterized in that** the rear wall of the galvo head (2) is mounted flush on the front wall of the housing (1).

12. Laser according to any of claims 1 to 11, **characterized in that** the galvo head (2) has one or more galvo mounting mounting openings (23), to which a respective galvo mount (24, 25) bearing a respective galvo is mounted, wherein in particular one galvo mount (24) is mounted at the front wall of the galvo head (2).

13. Laser according to any of claims 1 to 12, **characterized in that** the galvo mount (24, 25) has one or more channels therethrough for guiding the cooling liquid provided in the cooling system.

14. Laser according to any of claims 1 to 13, **characterized in that** the galvo head (2) has a camera mounting (26) to which an optical camera (29) is mounted, wherein the optical path of the camera is merged with the laser beam (5) within the galvo head (2), by means of a dichroic mirror (30) in the path of the laser beam (5) and the optical path.

15. Laser according to claim 14, **characterized in that** laser beam (5) and/or the optical path of the camera (29) exit at a top or bottom wall of the galvo head (2), which top or bottom wall delimits the laser to the top respective bottom side.

16. Laser according to any of claims 1 to 15, **characterized in that** the beam dump (14) is constituted by a beam dump inner part (32) and a beam dump outer part (33) adapted to adsorb the part of the laser beam (5) in order to control the power of the laser, wherein the beam dump inner part (32) has a dump mirror (34) reflecting the part of the laser to be dumped to the inside of the beam dump outer part (33), wherein the dump mirror (34) is a coated mirror, and wherein the beam dump inner part (32) has a lens adapted to lower intensity of the part of the laser beam to be dumped.

17. Laser according to any of claims 1 to 16, **characterized in that** there is provided inside the housing (1) a negative lens adapted to diverge the part of the beam to be dumped such that the diverged laser beam parts are reflected on the dump mirror (34).

18. Laser according to any of claims 1 to 17, **characterized in that** the beam dump outer part (33) has a flat surface which is mounted flush on a side surface of the housing (1), wherein the beam dump outer part (33) has one or more channels therethrough for guiding the cooling liquid.

19. Laser according to any of claims 1 to 18, **characterized in that** the galvo mounting (24, 25) and/or the beam dump (14) and/or the cooling body (40) is made of copper or a highly thermal conductive metal or alloy.

20. Laser according to any of claims 1 to 19, **characterized in that** within the housing (1), there are provided a first and/or second and/or further expander (12, 13) which are adapted to change the beam size of the laser beam (5).

21. Method of assembling a laser for laser engraving, which has a tunable power, wherein the materials of the different elements which constitute the laser are chosen such that a thermal center is lying in the connection surface between the respective element and a housing body (7), respective galvo head body (18).

## Amended claims

### Amended claims in accordance with Rule 137(2) EPC.

1. A Laser for laser engraving comprising:
a housing (1),
a galvo head (2) for manipulating a laser beam (5) to execute laser engraving with the laser beam (5),
a beam dump (14) for dumping a part of the laser beam (5) to control the power of the laser,
wherein a cooling-system is provided which is adapted to cool locally at least a portion of the galvo head (2) and at least a portion of the beam dump (14).

2. Laser according to claim 1, **characterized in that** the cooling-system is a liquid cooling-system and comprises a cooling liquid inlet which is fluidly connected to one of a galvo mounting (24) or a beam dump outer part (33) of the beam dump (14), which beam dump outer part (33) is adapted to adsorb the part of the laser beam (5) in order to control the power of the laser beam (5), and a cooling liquid outlet which is fluidly connected to the other one of the galvo mounting (24) or the beam dump outer part (33) and a fluid connection between the galvo mounting (24) and the beam dump outer part (33), wherein the liquid cooling-system is adapted to circulate a cooling liquid in order to cool at least the galvo mounting (24) and the beam dump outer part (33).

3. Laser according to claim 2, **characterized in that** the galvo mounting (24) is provided upstream of the beam dump outer part (33) in the liquid cooling-system.

4. Laser according to any of claims 1 to 3, **characterized in that** the laser further comprises one or more drivers (41) for driving a respective galvo (3, 4) in the galvo head (2) to execute laser engraving with the laser beam (5).

5. Laser according to claim 4, **characterized in that** the one or more drivers (41) are mounted on a cooling body (40) which is adapted to be cooled by the liquid cooling system, wherein the cooling body (40) is provided upstream of the beam dump outer part (33) and/or downstream of the galvo mounting (24) in the liquid cooling-system.

6. Laser according to any of claims 1 to 5, **characterized in that** the housing (1) houses a collimator (8) for collimating the laser beam (5), a pulse compressor (9) for compressing laser pulses of the laser beam (5), a modulator (10) for separating the part of the laser beam (5) to be fed to the beam dump (14), and a beam dump inner part (32), and wherein the beam dump outer part (33) is mounted on a side surface of the housing (1) and in alignment with the beam dump inner part (32) such that the part of the laser beam (5) comes from the beam dump inner part (32) and is dumped in the beam dump outer part (33).

7. Laser according to any of claims 1 to 6, **characterized in that** the laser is configured **in that** the laser beam (5) is irradiated at a front side surface of the housing (1), wherein at the front side surface of the housing, there is mounted the galvo head (2), which is a separate element from the housing (1), and the laser beam (5) is moved in a scanning movement by the respective galvo (3, 4), which is mounted inside the galvo head (2) via the galvo mounting (24, 25).

8. Laser according to claim 7, **characterized in that** there is provided a y-galvo (4) and an x-galvo (3) each of which is mounted via a respective x- or y- galvo mounting (24, 25) to the galvo head (2), which galvos (3, 4) move the laser beam (5) in the x- or respectively y-direction in an orthogonal x-, y- z- coordinate system where the z-axis corresponds to the laser beam axis of the laser beam (5) irradiated from the front side surface of the housing (1), wherein one or both of the x- and y- galvo mounting (24, 25) is integrated in the liquid cooling-system.

9. Laser according to any of claims 1 to 8, **characterized in that** the housing (1) comprises a unitary housing body (7) including two opposite side walls, a front wall at the front side thereof and a rear wall at a rear side thereof, wherein the walls have at least a portion having a planar plate-like shape, and the wall thickness of said portion is at least 18 to 50 mm.

10. Laser according to any of claims 1 to 9, **characterized in that** the galvo head (2) comprises a unitary galvo head body (18) including two opposite side walls, a front wall at a front side thereof and a rear wall at a rear side thereof, wherein the walls have at least a portion having a planar plate-like shape, and the wall thickness of said portion is at least 18 to 50 mm.

11. Laser according to claim 10, **characterized in that** the rear wall of the galvo head (2) is mounted flush on the front wall of the housing (1).

12. Laser according to any of claims 1 to 11, **characterized in that** the galvo head (2) has one or more galvo mounting mounting openings (23), to which a respective galvo mount (24, 25) bearing a respective galvo is mounted, wherein in particular one galvo mount (24) is mounted at the front wall of the galvo head (2).

13. Laser according to any of claims 1 to 12, **characterized in that** the galvo mount (24, 25) has one or more channels therethrough for guiding the cooling liquid provided in the cooling system.

14. Laser according to any of claims 1 to 13, **characterized in that** the galvo head (2) has a camera mounting (26) to which an optical camera (29) is mounted, wherein the optical path of the camera is merged with the laser beam (5) within the galvo head (2), by means of a dichroic mirror (30) in the path of the laser beam (5) and the optical path.

15. Laser according to claim 14, **characterized in that** laser beam (5) and/or the optical path of the camera (29) exit at a top or bottom wall of the galvo head (2), which top or bottom wall delimits the laser to the top respective bottom side.

16. Laser according to any of claims 1 to 15, **characterized in that** the beam dump (14) is constituted by a beam dump inner part (32) and a beam dump outer part (33) adapted to adsorb the part of the laser beam (5) in order to control the power of the laser, wherein the beam dump inner part (32) has a dump mirror (34) reflecting the part of the laser to be dumped to the inside of the beam dump outer part (33), wherein the dump mirror (34) is a coated mirror, and wherein the beam dump inner part (32) has a lens adapted to lower intensity of the part of the laser beam to be dumped.

17. Laser according to any of claims 1 to 16, **characterized in that** there is provided inside the housing (1) a negative lens adapted to diverge the part of the beam to be dumped such that the diverged laser beam parts are reflected on the dump mirror (34).

18. Laser according to any of claims 1 to 17, **characterized in that** the beam dump outer part (33) has a flat surface which is mounted flush on a side surface of the housing (1), wherein the beam dump outer part (33) has one or more channels therethrough for guiding the cooling liquid.

19. Laser according to any of claims 1 to 18, **characterized in that** the galvo mounting (24, 25) and/or the beam dump (14) and/or the cooling body (40) is made of copper or a highly thermal conductive metal or alloy.

20. Laser according to any of claims 1 to 19, **characterized in that** within the housing (1), there are provided a first and/or second and/or further expander (12, 13) which are adapted to change the beam size of the laser beam (5).
